# EUROPEAN PATENT SPECIFICATION

(11) **EP 1 174 218 B1**
(45) Date of publication and mention of the grant of the patent: **13.09.2006**
(21) Application number: 01306208.8
(22) Date of filing: 19.07.2001
(51) Int. Cl.: B24D 7/18, B24B 9/00, B26D 3/16

(54) **A pipe-chamfering disk**
Scheibe zum Anfasen von Rohrenden
Disque pour chanfreiner les tubes

(30) Priority: 19.07.2000 GB 0017591
(43) Date of publication of application: 23.01.2002
(73) Proprietor: Le Gallais, Lionel, St. Helier JE2 3GL Jersey (GB)
(72) Inventor: Le Gallais, Lionel, St. Helier JE2 3GL Jersey (GB)
(74) Representative: James, Michael John Gwynne

(56) References cited:
- WO-A-97/27969
- WO-A-98/16342
- US-A- 5 000 629
- PATENT ABSTRACTS OF JAPAN vol. 1998, no. 03, 27 February 1998 (1998-02-27) & JP 09 295219 A (MITSUBISHI HEAVY IND LTD), 18 November 1997 (1997-11-18)

## Description

The cutting and preparation of certain pipes for use (for example pipes of plastics materials for drainage purposes) presents a problem since the pipes are bulky and difficult to handle and for many purposes a chamfer or bevel is required along the cut circumference. For example, drainage pipes of plastics materials are often connected to one another by rubber collars or grommets, and a chamfered edge on a pipe is desirable as it facilitates fitting of the pipe in a collar, (see for example WO-A-98 16342).

From a first aspect the invention provides a pipe-chamfering disk for imparting a chamfer to the cut circumference of a cut pipe, said disk including chamfering teeth and a substantially flat body portion having cutting teeth, the cutting teeth being for cutting through a pipe prior to engagement of the chamfering teeth with the pipe, characterised in that the chamfering teeth are pressed or bent from the substantially flat body portion, and at least one set of chamfering teeth are pressed or bent sideways out of the plane of the cutting teeth so that each chamfering tooth in said set extends sideways from a cutting tooth and out of the plane of the cutting tooth.

The pipe-chamfering disk may be in the form of a cutting disk, for operation with a tool adapted to spin a cutting or grinding disk, such as an angle-grinding tool or the like. Typically, in use, the disk will be used to cut vertically in a plane across the pipe axis.

The disk may be pressed from saw steel, plate steel or other appropriate, typically flat, metallic material. Preferably the disk is tempered or otherwise hardened.

Typically each of the chamfering teeth defines a cutting edge angled obtusely away from the plane of the plate and the cutting teeth so that, in use, after the cutting teeth have penetrated the material of the pipe, the chamfering teeth are configured to cut at least one chamfer angled inwardly towards the plane of the cut.

Preferably, though not necessarily, the pipe-chamfering disk has two sets of chamfering teeth projecting from opposed sides of the cutting teeth, so that the two sets of chamfering teeth produce a separate chamfer on either side of the plane of the cut.

The invention also extends to a pipe-chamfering assembly which includes a pipe-chamfering disk of the invention as hereinbefore defined in combination with a rotatable sleeve for receiving a pipe and facilitating rotation of the pipe, during operation, by rotation of the sleeve relative to the disk. Typically the sleeve is configured to be rotated manually.

The assembly may include a lock device for checking rotation of the sleeve. The lock device may be in the form of a spring-urged ball detent and a complementary recess within which the ball can engage at a particular datum point in the rotation path of the sleeve.

This assembly may include two sleeves, to permit relative rotation of separate cut portions of a pipe. Thus one portion may be locked while the other is rotated to achieve a clean chamfer against the chamfering teeth of the disk.

The base of the assembly may include extensions (which may be integral with the base itself) dimensioned and configured to provide stability to the assembly, particularly under conditions of use.

The sleeve(s) of the assembly may be diametrically split and the two halves of each arranged (eg by a pivotal connection of the two halves of the sleeve(s) to each other) to be separated and married up along the split at will to permit a pipe to be inserted into and frictionally engaged by the sleeve(s).

The assembly may include a drive member for rotationally driving the disk, the drive member being mounted in a comparatively simple arrangement adjacent to the sleeve(s) or in register with a slot in a portion of the assembly, so that the disk can be brought into contact with a pipe held in the sleeve.

A further aspect of the invention provides a method of preparing a pipe-chamfering disk according to any one of claims 1-5, the disk being formed from a substantially flat body portion having cutting teeth, characterised by the step of pressing or bending chamfering teeth sideways out of the plane of the substantially flat body portion, in which at least one set of chamfering teeth are pressed or bent sideways out of the plane of the cutting teeth so that each chamfering tooth in said set extends sideways from a cutting tooth and out of the plane of the cutting tooth.

It is envisaged that the cutting and pressing process for producing the pipe-chamfering disk would be carried out in a continuous pressing process. Thus, the production process may involve consecutive or simultaneous steps of stamping a blank of a cutting disk and pressing the chamfering teeth sideways out of the plane of the blank.

The invention will now be described further, by way of example, with reference to the accompanying diagrammatic drawings, in which:
Figure 1 shows, schematically, a side view of a pipe-chamfering means according to the invention in the form of a pipe-cutting disk;
Figure 2 shows, schematically, an end-on view of the pipe-cutting disk shown in Figure 1;
Figure 3 shows, schematically, an exploded front sectional view of part of a pipe-chamfering assembly according to the invention;
Figure 4 shows, schematically, a side sectional elevation taken at the line IV-IV in Figure 3; and
Figure 5 shows, schematically, a side sectional elevation taken at the line V-V in Figure 3.

Referring to the drawings, a pipe-chamfering disk 10 is in the form of a cutting disk and includes chamfering teeth 12 pressed or bent sideways out of the plane of a substantially flat body portion 14.

Cutting teeth 16 are provided for cutting through a pipe prior to engagement of the chamfering teeth 12 with the pipe.

Each of the chamfering teeth 12 defines a cutting edge 18 angled obtusely away from the plane of the plate and from the cutting teeth 16 so that, in use, after the cutting teeth have penetrated the material of a pipe, the chamfering teeth are configured to cut at least one chamfer angled inwardly towards the plane of the cut.

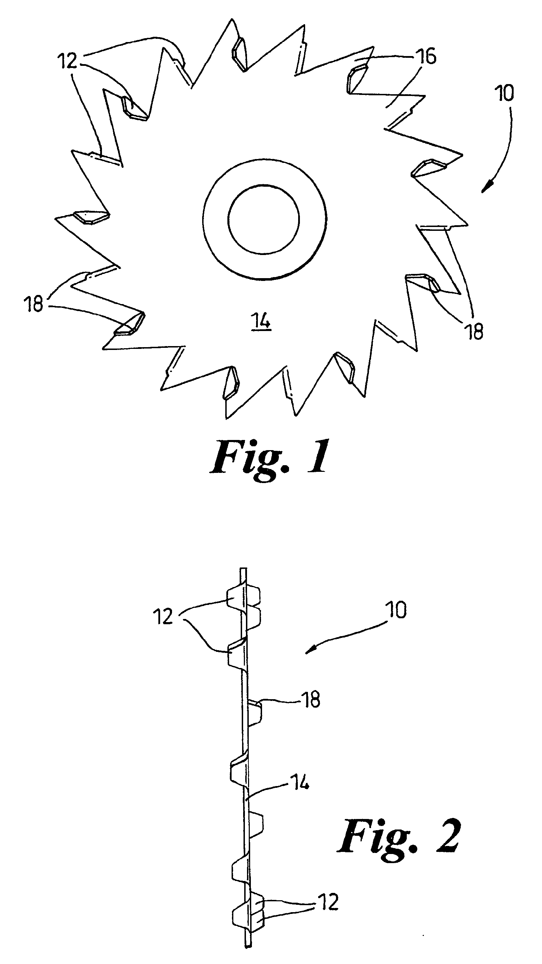

As can be seen in Figure 2, the cutting disk 10 has two sets of chamfering teeth 12 projecting from opposed sides of the plane of the body portion 14 so that, in use, the two sets of chamfering teeth will produce a separate chamfer on either side of the plane of the cut.

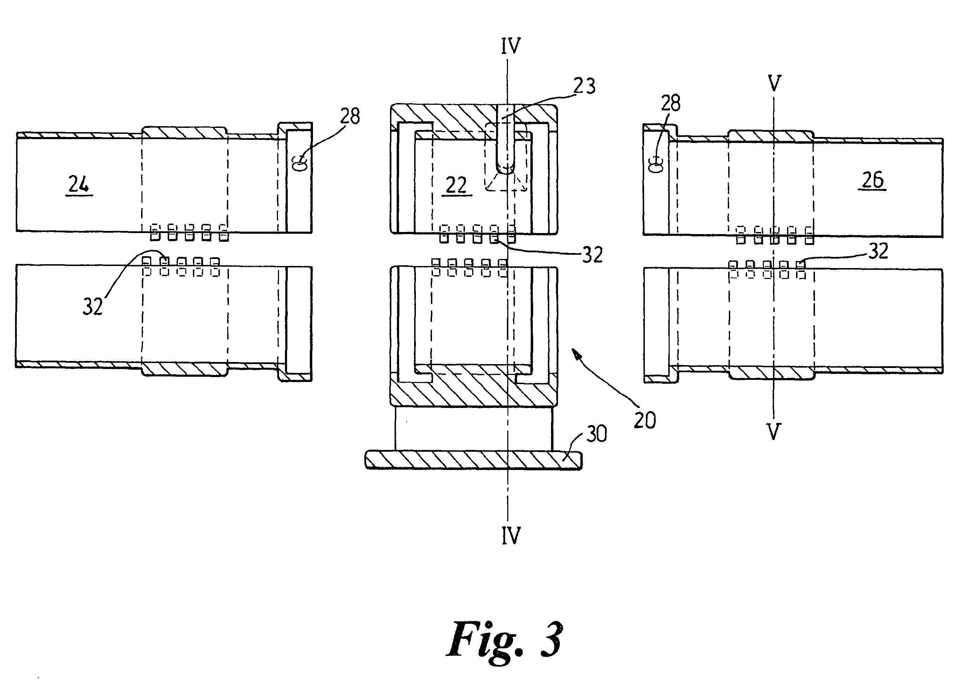

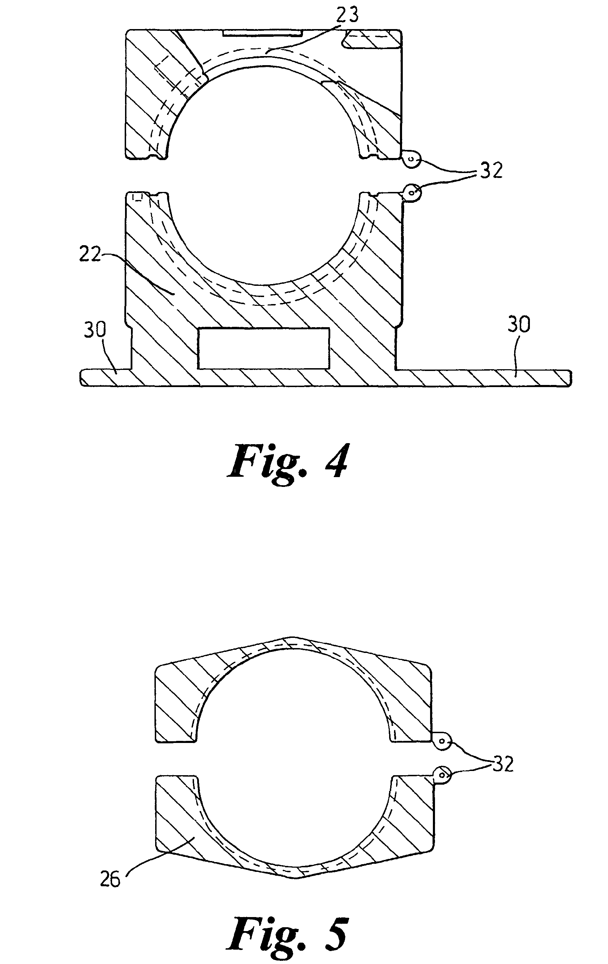

Turning to Figures 3 to 5, reference numeral 20 indicates generally a part of a pipe-chamfering assembly, shown exploded. The assembly 20 is intended to be used in combination with a chamfering means in the form of a cutting disk of Figures 1 and 2 (not shown) driven by a power tool (also not shown) mounted on a central portion 22 of the assembly 20. In use, the cutting disk would protrude down through a slot 23 to engage with a pipe passing through the central portion 22.

Sleeves 24 and 26 are rotatable with respect to the central portion 22. When assembled, the sleeves 24, 26 engage with the central portion 22 in such a way that they may be rotated manually. The pipe to be cut and chamfered is received snugly in the sleeves and is rotated relative to the spinning cutting and chamfering teeth of the cutting disk. Once the pipe has been cut through, one portion of the pipe can be rotated whilst the other portion is held still, to enable chamfering of first one cut edge and then the other cut edge of the pipe.

In order to facilitate holding each separate portion of a cut pipe still whilst the other portion is rotated, the assembly 20 includes a locking device (shown schematically by the circles 28) for checking rotation of the sleeves 24, 26. These circles 28 symbolise spring-urged ball detents (not shown) which engage with complementary recesses (also not shown) at a given point in the rotation path of the sleeves around the central portion 22 to lock the sleeves to the central portion 22.

The base of the assembly 20 includes sturdy extensions 30 dimensioned and configured to provide stability to the assembly, particularly under conditions of use.

As can be seen from Figures 3 to 5 of the drawings, the sleeves 24, 26 and the central portion 22 are diametrically split and the two halves of each part are arranged by means of pivotal connections 32 to be opened and closed onto each other at will to permit a pipe to be inserted into and frictionally engaged by the sleeves and released after cutting and chamfering.

It is believed that the pipe-chamfering means ("the device") has certain advantages over previous pipe cutting disks. The present device is lighter and less complicated to manufacture, and automation of pressing process can more simply be achieved than with previous designs. Because it is inexpensive and wears out quickly the device is a throwaway item, and sale of the device will provide a certain consistency of income since it will have to be replaced frequently.

## Claims

1. A pipe-chamfering disk (10) for imparting a chamfer to the cut circumference of a cut pipe, said disk including chamfering teeth and a substantially flat body portion (14) having cutting teeth (16), the cutting teeth being for cutting through a pipe prior to engagement of the chamfering teeth with the pipe, **characterised in that** the chamfering teeth are pressed or bent from the substantially flat body portion, and at least one set of chamfering teeth are pressed or bent sideways out of the plane of the cutting teeth so that each chamfering tooth in said set extends sideways from a cutting tooth and out of the plane of the cutting tooth.

2. A disk according to claim 1, for operation with a tool adapted to spin a cutting or grinding disk.

3. A disk as claimed in claim 1 or claim 2, pressed from saw steel, plate steel or other appropriate, typically flat, metallic material, preferably tempered or otherwise hardened.

4. A disk according to any one of claims 1 to 3, wherein each chamfering tooth defines a cutting edge (18) angled obtusely away from the plane of the substantially flat body and the cutting teeth.

5. A disk according to any one of claims 1 to 4 which has two sets of chamfering teeth (12) projecting from opposed sides of the cutting teeth (16), so that the two sets of chamfering teeth produce a separate chamfer on either side of the plane of the cut.

6. A pipe-chamfering assembly including a pipe-chamfering disk as claimed in any one of claims 1 to 5, in combination with a rotatable sleeve(24,26) for snugly receiving a pipe and facilitating rotation of the pipe, during operation, by rotation of the sleeve relative to the disk.

7. An assembly according to claim 6, including a lock device (28) for checking rotation of the sleeve.

8. An assembly according to claim 7, wherein the lock device is in the form of a spring-urged ball detent and a complementary recess within which the ball can engage at a particular datum point in the rotation path of the sleeve.

9. An assembly according to any one of claims 6 to 8, including two sleeves, to permit relative rotation of separate cut portions of a pipe.

10. An assembly according to any one of claims 6 to 9, including extensions dimensioned and configured to provide stability to the assembly, particularly under conditions of use.

11. An assembly according to any one of claims 6 to 10, wherein the or each sleeve of the assembly is diametrically split and the two halves of each arranged to be separated and married up along the split at will to permit a pipe to be inserted into and frictionally engaged by the or each sleeve.

12. An assembly according to any one of claims 6 to 11, including a drive member for rotationally driving the disk, the drive member being mounted adjacent to the or each sleeve or in register with a slot in a portion of the assembly, so that the disk can be brought into contact with a pipe held in the sleeve.

13. A method of preparing a pipe-chamfering disk according to any one of claims 1-5, the disk being formed from a substantially flat body portion (14) having cutting teeth (16), **characterised by** the step of pressing or bending chamfering teeth (12) sideways out of the plane of the substantially flat body portion, in which at least one set of chamfering teeth are pressed or bent sideways out of the plane of the cutting teeth so that each chamfering tooth in said set extends sideways from a cutting tooth and out of the plane of the cutting tooth.

14. A method according to claim 13, involving consecutive or simultaneous steps of stamping a blank of a cutting disk and pressing the chamfering teeth sideways out of the plane of the blank.

## Patentansprüche

1. Scheibe (10) zum Anfasen von Rohrenden, mit der dem Umfangsschnitt eines geschnittenen Rohres eine Fase erteilt wird, wobei die Scheibe mit Abfasungszähnen und einem im wesentlichen flachen Körperteil (14) versehen ist, der Schneidzähne (16) aufweist, die zum Durchschneiden eines Rohres dienen, bevor der Eingriff der Abfasungszähne in das Rohr erfolgt, **dadurch gekennzeichnet, daß** die Abfasungszähne aus dem im wesentlichen flachen Körperteil gepreßt oder gebogen werden und wenigstens ein Satz Abfasungszähne aus der Ebene der Schneidzähne so hinausgepreßt oder hinausgebogen wird, daß jeder Abfasungszahn in dem Zahnsatz sich von einem Schneidzahn seitwärts und aus der Ebene des Schneidzahns heraus erstreckt.

2. Scheibe nach Anspruch 1 für den Betrieb mit einem Werkzeug, das in der Lage ist, eine Schneid- oder Schleifscheibe zu drehen.

3. Scheibe nach Anspruch 1 oder 2, gepreßt aus Sägestahl, Blechstahl oder einem anderen geeigneten, gewöhnlich flachen, metallischen Material, vorzugsweise wärmebehandelt oder auf andere Weise gehärtet.

4. Scheibe nach einem der Ansprüche 1 bis 3, **dadurch gekennzeichnet, daß** jeder Abfasungszahn eine Schneidkante (18) bildet, die unter einem stumpfen Winkel aus der Ebene des im wesentlichen flachen Körpers und der Schneidzähne wegweist.

5. Scheibe nach einem der Ansprüche 1 bis 4, **dadurch gekennzeichnet, daß** sie zwei Sätze Abfasungszähne (12) aufweist, die aus entgegengesetzten Seiten der Schneidzähne (16) so vorstehen, daß die beiden Sätze Abfasungszähne auf jeder Seite der Schnittebene eine separate Abfasung erzeugen.

6. Rohrabfasungsanordnung mit einer Rohrabfasungsscheibe nach einem der Ansprüche 1 bis 5 in Verbindung mit einer drehbaren Hülse (24, 26), die durch Einschnappen ein Rohr aufnimmt und das Drehen des Rohres während des Betriebs durch Drehen der Hülse in Bezug auf die Scheibe erleichtert.

7. Anordnung nach Anspruch 6, **gekennzeichnet durch** eine Verriegelungseinrichtung (28) zur Überprüfung der Drehbewegung der Hülse.

8. Anordnung nach Anspruch 7, **dadurch gekennzeichnet, daß** die Verriegelungseinrichtung die Forme einer federbelasteten Kugel und einer komplementären Aussparung aufweist, in die an einem bestimmten Bezugspunkt des Drehweges der Hülse die Kugel eingreifen kann.

9. Anordnung nach einem der Ansprüche 6 bis 8, **gekennzeichnet durch** zwei Hülsen, die eine Relativdrehung der separaten Schneidteile eines Rohres ermöglichen.

10. Anordnung nach einem der Ansprüche 6 bis 9, **gekennzeichnet durch** Verlängerungen, die so bemessen und gestaltet sind, daß sie der Anordnung insbesondere unter Benutzungsbedingungen Stabilität verleihen.

11. Anordnung nach einem der Ansprüche 6 bis 10, **dadurch gekennzeichnet, daß** jede Hülse der Anordnung diametral geschlitzt ist und jede der beiden Hälften so angeordnet ist, daß sie entlang des Schlitzes wunschgemäß getrennt und vereinigt werden kann, um **dadurch** zu ermöglichen, daß ein Rohr eingesetzt und mit der oder jeder Hülse in Reibungseingriff bringbar ist.

12. Anordnung nach einem der Ansprüche 6 bis 11, **gekennzeichnet durch** einen Antriebskörper, mit dem die Scheibe in Drehung versetzbar ist und der neben der oder jeder Hülse oder in Überdeckung mit einem Schlitz in einem Teil der Anordnung befestigbar ist, so daß die Scheibe mit einem Rohr, das in der Hülse gehalten wird, in Berührung bringbar ist.

13. Verfahren zur Herstellung einer Rohranfasungsscheibe nach einem der Ansprüche 1 bis 5, wobei die Scheibe aus einem im wesentlichen flachen Körperteil (14) gebildet wird, der mit Schneidzähnen (16) versehen ist, **dadurch gekennzeichnet, daß** Abfasungszähne (12) seitlich aus der Ebene des im wesentlichen flachen Körperteils gedrückt oder gebogen werden, wobei im wesentlichen ein Satz Abfasungszähne seitwärts aus der Ebene der Schneidzähne so hinausgedrückt oder gebogen wird, daß jeder Abfasungszahn in dem Satz sich von einem Schneidzahn seitlich aus der Ebene des Schneidzahns weg erstreckt.

14. Verfahren nach Anspruch 13, **gekennzeichnet durch** aufeinanderfolgende oder simultane Schritte des Stanzens eines Rohlings einer Schneidscheibe und Herauspressens der Abfasungszähne in seitlicher Richtung aus der Ebene des Rohlings.

## Revendications

1. Disque (10) pour chanfreiner les tubes pour donner un chanfrein à la circonférence découpée d'un tube coupé, lesdits disques comprenant des dents de chanfreinage et une partie de corps (14), sensiblement plate, ayant des dents de coupe (16), les dents de coupe étant destinées à la coupe à travers un tube avant l'engagement des dents de chanfreinage avec le tube, **caractérisé par le fait que** les dents de chanfreinage sont pressées ou pliées à partir de la partie de corps sensiblement plate, et au moins un ensemble de dents de chanfreinage est pressé ou plié latéralement hors du plan des dents de coupe de telle sorte que chaque dent de chanfreinage dans ledit ensemble s'étende latéralement à partir d'une dent de coupe et hors du plan de la dent de coupe.

2. Disque selon la revendication 1, pour un fonctionnement avec un outil adapté pour faire tourner un disque de coupe ou de broyage.

3. Disque selon la revendication 1 ou la revendication 2, pressé à partir d'acier pour scies, d'acier pour plaques ou autre matériau métallique approprié, typiquement plat, de préférence revenu ou autrement trempé.

4. Disque selon l'une quelconque des revendications 1 à 3, dans lequel chaque dent de chanfreinage définit une bordure de coupe (18) formant un angle obtus en s'éloignant du plan du corps sensiblement plat et des dents de coupe.

5. Disque selon l'une quelconque des revendications 1 à 4, qui a deux ensembles de dents de chanfreinage (12) se projetant à partir de côtés opposés des dents de coupe (16), de telle sorte que les deux ensembles de dents de chanfreinage produisent un chanfrein séparé sur l'un et l'autre côté du plan de la coupe.

6. Ensemble de chanfreinage de tubes comprenant un disque de chanfreinage de tubes tel que défini à l'une quelconque des revendications 1 à 5, en combinaison avec un manchon tournant (24, 26) pour recevoir à frottement doux un tube et faciliter la rotation du tube, pendant le fonctionnement, par rotation du manchon par rapport au disque.

7. Ensemble selon la revendication 6, comprenant un dispositif de verrouillage (28) pour vérifier la rotation du manchon.

8. Ensemble selon la revendication 7, dans lequel le dispositif de verrouillage se présente sous la forme d'un arrêt à bille sollicitée par ressort et d'une cavité complémentaire à l'intérieur de laquelle la bille peut s'engager à un point de repère particulier dans le trajet de rotation du manchon.

9. Ensemble selon l'une quelconque des revendications 6 à 8, comprenant deux manchons, pour permettre une rotation relative de parties découpées séparées d'un tube.

10. Ensemble selon l'une quelconque des revendications 6 à 9, comprenant des extensions dimensionnées et configurées pour assurer une stabilité à l'ensemble, en particulier dans des conditions d'utilisation.

11. Ensemble selon l'une quelconque des revendications 6 à 10, dans lequel le ou chaque manchon de l'ensemble est fendu diamétralement et les deux moitiés de chacun sont disposées pour être séparées et combinées le long de la fente à volonté pour permettre à un tube d'être introduit dans et engagé par frottement par le ou chaque manchon.

12. Ensemble selon l'une quelconque des revendications 6 à 11, comprenant un élément d'entraînement pour entraîner le disque en rotation, l'élément d'entraînement étant monté adjacent au ou à chaque manchon ou en registre avec une fente dans une partie de l'ensemble, de telle sorte que le disque peut être amené en contact avec un tube maintenu dans le manchon.

13. Procédé de préparation d'un disque de chanfreinage de tubes tel que défini à l'une quelconque des revendications 1 à 5, le disque étant formé à partir d'une partie de corps (14) sensiblement plate, ayant des dents de coupe (16), **caractérisé par** l'étape de pression ou de pliage des dents de chanfreinage (12) latéralement hors du plan de la partie de corps sensiblement plate, dans laquelle au moins un ensemble de dents de chanfreinage est pressé ou plié latéralement hors du plan des dents de coupe de telle sorte que chaque dent de chanfreinage dans ledit ensemble s'étende latéralement à partir d'une dent de coupe et hors du plan de la dent de coupe.

14. Procédé selon la revendication 13, mettant en jeu des étapes consécutives ou simultanées d'estampage d'une ébauche d'un disque de découpe et de pressage des dents de chanfreinage latéralement hors du plan de l'ébauche.
